# EUROPÄISCHE PATENTSCHRIFT

(11) **EP 1 595 301 B1**
(45) Veröffentlichungstag und Bekanntmachung des Hinweises auf die Patenterteilung: **07.06.2006**
(21) Anmeldenummer: 04701578.9
(22) Anmeldetag: 13.01.2004
(51) Int. Cl.: H01M 8/02

(54) **SCHUTZSCHICHT FÜR HOCHTEMPERATURBELASTETE SUBSTRATE SOWIE VERFAHREN ZUR HERSTELLUNG DERSELBEN**
PROTECTIVE COATING FOR SUBSTRATES THAT ARE SUBJECTED TO HIGH TEMPERATURES AND METHOD FOR PRODUCING SAID COATING
COUCHE PROTECTRICE POUR SUBSTRATS SOUMIS A DES TEMPERATURES ELEVEES ET SON PROCEDE DE REALISATION

(30) Priorität: 18.02.2003 DE 10306649
(43) Veröffentlichungstag der Anmeldung: 16.11.2005
(73) Patentinhaber: Forschungszentrum Jülich GmbH, 52425 Jülich (DE)
(72) Erfinder: TIETZ, Frank, 52428 Jülich (DE); ZAHID, Mohsine, 65385 Rüdesheim am Rhein (DE); QUADAKKERS, Willem, J., NL-6363 EG Wijnandsrade (NL); SHEMET, Vladimir, 52428 Jülich (DE)
(86) Internationale Anmeldenummer: PCT/DE2004/000024
(87) Internationale Veröffentlichungsnummer: WO 2004/075323

(56) Entgegenhaltungen:
- WO-A-96/28855
- WO-A-97/04494
- DE-A- 10 050 010

## Beschreibung

Die Erfindung betrifft eine Schutzschicht für hochtemperaturbelastete Substrate, insbesondere für Interkonnektoren für Hochtemperatur-Brennstoffzellen, sowie ein Verfahren zu dessen Herstellung

### Stand der Technik

Eine Hochtemperatur-Brennstoffzelle (Solid Oxide Fuel Cell - SOFC) ermöglicht eine direkte Umwandlung von chemischer in elektrische Energie. Der Brennstoff (H₂, CH₄, CO etc.) wird von einem Oxidationsmittel (O₂, Luft) durch einen sauerstoffleitenden Feststoffelektrolyten (Y-stabilis'iertes ZrO₂) getrennt. Bei einer Betriebstemperatur der Zelle von etwa 600 bis 1000 °C werden Sauerstoffionen von der Kathodenseite durch den Elektrolyten geleitet, die an der Anode mit dem Brennstoff reagieren. Der Elektrolyt ist mit porösen, katalytisch wirkenden Elektrodenmaterialien beschichtet. Im allgemeinen besteht die Anode (Brennstoffseite) aus einem Ni/ZrO₂-Cermet, die Kathode (Sauerstoffseite) aus einem Perowskit auf LaMnO₃-Basis.

Um die SOFC-Technik für die Stromerzeugung nutzen zu können, müssen mehrere Zellen zusammengeschaltet werden. Daher ist noch eine weitere Zellkomponente nötig, nämlich die bipolare Platte, die auch Interkonnektor genannt wird. Im Gegensatz zum Elektrolyten und den Elektroden, die größenordnungsmäßig 100 µm dick sind, ist die bipolare Platte bei den meisten heute diskutierten SOFC-Flachzellen-Konzepten von einem halben bis einige Millimeter dick und bildet dabei nicht nur das gaszuleitende Verbindungsglied zwischen den Einzelzellen, sondern auch die tragende Komponente der Zelle (EP 0338 823 Al). Interkonnektoren für Hochtemperatur-Brennstoffzellen sowie ein Herstellungsverfahren sind aus der Literatur hinreichend bekannt.

Eine wesentliche Eigenschaft, die eine Interkonnektorlegierung aufweisen muss, ist eine hohe Oxidationsbeständigkeit in dem Anoden- und Kathodengas bei Betriebstemperatur. Außerdem muss sie, wegen der thermophysikalischen Kompatibilität mit den keramischen Zellkomponenten, einen für Metalle relativ niedrigen Ausdehnungskoeffizienten (etwa 10 - 13 * 10⁻⁶ K⁻¹) aufweisen. Der exakte Ausdehnungskoeffizient hängt vom jeweiligen Zellenkonzept ab, d. h. bei Brennstoffzellen mit einem Anodensubstrat als mechanisch tragende Komponente sind im allgemeinen etwas höhere Ausdehnungskoeffizienten erforderlich als bei Zellenkonzepten, die eine Elektrolytfolie als tragende Komponente besitzen.

Die gewünschte Eigenschaftskombination für Interkonnektorwerkstoffe können im Prinzip von chromoxidbildenden Hochtemperaturwerkstoffen erfüllt werden. Diese Werkstoffgruppe bildet bei den typischen SOFC-Betriebstemperaturen eine oxidische Deckschicht auf Chromoxidbasis aus, die den Werkstoff vor schneller Schädigung durch Oxidation schützt. Die meisten chromoxidbildenden Werkstoffe (auf der Basis NiCr, NiFeCr oder CoCr) sind jedoch für die Anwendung in Hochtemperatur-Brennstoffzellen nicht geeignet, da sie wesentlich höhere thermische Ausdehnungskoeffizienten aufweisen als die üblichen keramischen Komponenten der Zelle. Daher werden insbesondere für Flachzellenkonzepte der Hochtemperatur-Brennstoffzelle vorwiegend zwei Gruppen von chromoxidbildenden Werkstoffen als Interkonnektormaterial in Betracht gezogen: Chrombasislegierungen oder chromreiche Legierungen auf Eisenbasis (ferritische Stähle).

Bei hohen Temperaturen (ca. 300 - 1200 °C) reagiert die Chromoxidschicht mit Sauerstoff und H₂O zu Chromtrioxid (CrO₃) und/oder Chromoxidhydroxiden (CrO₂ (OH)₂, CrO(OH)₄), die wegen ihres hohen Dampfdruckes bei diesen Temperaturen durch den Gasraum zur Kathode bzw. zur Grenzfläche zwischen Elektrolyt und Kathode transportiert werden können. Dort reagieren diese Cr(VI)-Verbindungen mit dem Kathodenmaterial und führen zu einer katalytischen Behinderung der Sauerstoffreduktion während des Brennstoffzellenbetriebs. Dieser Prozess trägt maßgeblich zur Verringerung von Leistungs- und Lebensdauer der Brennstoffzelle bei.

Zur Verhinderung der Chromverdampfung wurden bisher verschiedene Verfahren vorgeschlagen oder angewendet. Beispielsweise wird in der Literatur ein Verfahren beschrieben, bei dem die Oberfläche der Interkonnektoren mit aluminiumreichen Schichten belegt wird. Allerdings müssen hier die Kontaktflächen zwischen Elektroden und Interkonnektor aluminiumfrei bleiben, da sich sonst ein zu hoher Widerstand einstellen würde. Die Auswirkungen der Chromverdampfung treten somit verzögert auf, sind aber nicht behoben.

Als Verbesserung des Verfahrens wurde die zusätzliche Beschichtung der Kontaktflächen mit Nickel, Kobalt oder Eisen vorgenommen, damit sich bei Betriebsbedingungen eine (Cr,Ni)-, (Cr,Co)- oder (Cr,Fe)-Spinellschicht ausbilden kann, die die Chromverdampfung zusätzlich herabsetzt.

Eine weitere Variante stellt die Beschichtung von Interkonnektoren mit lanthanhaltigen Schichten dar (LaC-rO₃, La₂O₃, LaB₆) . Entweder wird die LaCrO₃-Schicht direkt aufgetragen oder das sich bildende Chromoxid reagiert mit den reaktiven lanthanhaltigen Schichten während des Betriebs zu LaCrO₃. Es ist jedoch in der Literatur erwähnt, dass Mikrorisse in der LaCrO₃-Schicht nicht ausheilen und somit keinen ausreichenden Schutz gegen die Chromverdampfung gewährleisten.

Ein ganz ähnlicher Ansatz zur Erzeugung von Schutzschichten ist entweder die Verwendung von Stählen, die Elemente wie beispielsweise Mangan, Nickel oder Kobalt enthalten, die unter oxidierenden Bedingungen zusammen mit Chrom Spinellschichten bilden, oder die Auftragung von manganhaltigen Schichten, die unter Reaktion mit Chromoxid ebenfalls zu Spinellschichten führen. Die Bildung dieser Chrom-Spinell-Strukturen führt nachweisbar zu einer Reduzierung der Chromverdampfung (Ch. Gindorf, L. Singheiser, K. Hilpert, Steel Research 72 (2001) 528 - 533). Diese ist aber immer noch nicht niedrig genug, um eine ausreichend hohe Leistung und lange Lebensdauer der Brennstoffzelle zu gewährleisten, da es immer noch zur Chrom-Diffusion durch die chromhaltige Spinellschicht kommt. Außerdem weist die Spinellphase wegen ihres hohen Cr-Anteils selbst einen Cr(VI)-Oxid- bzw. -Hydroxiddampfdruck auf. Somit können weiterhin Chrom(VI)oxid- und Chromoxidhydroxid-Verbindungen freigesetzt werden.

### Aufgabe und Lösung

Aufgabe der Erfindung ist es, eine gasdichte und chromfreie Schutzschicht für ein chromoxidbildendes Substrat zu schaffen, welche bei erhöhten Temperaturen das Abdampfen von Chrom aus dem Substrat verhindert. Somit ist es Aufgabe der Erfindung ein Herstellungsverfahren für eine solche Schutzschicht zur Verfügung zu stellen.

Die Aufgabe wird gelöst durch ein Herstellungsverfahren gemäß. Hauptanspruch sowie einen nach dem Verfahren hergestellten Interkonnektor. Vorteilhafte Ausführungsformen des Verfahrens und des Interkonnektors finden sich in den jeweils rückbezogenen Ansprüchen.

### Gegenstand der Erfindung

Im Rahmen dieser Erfindung wurde gefunden, dass eine Spinellschicht, umfassend einerseits ein Element aus der Gruppe (Mangan, Magnesium, Vanadium) und ein weiteres Element aus der Gruppe (Kobalt, Nickel Eisen, Kupfer oder Vanadium), vorteilhaft eine derart gasdichte Schicht bildet, die, auf einem chromoxidbildenden Substrat angeordnet, selbst bei hohen Temperaturen bis 1000 °C ein Abdampfen von Chrom aus dem Substrat nachhaltig verhindert.

Eine solche Schutzschicht ist in der Regel herstellungsbedingt zwischen einem chromoxidbildenden Substrat, insbesondere einem metallischen Interkonnektorwerkstoff, und einer weiteren Schicht angeordnet. Die weitere Schicht umfasst zumindest ein spinellbildendes Element aus der Gruppe (Fe, Co, Ni, Cu).

Typische chromoxidbildende Substrate sind beispielsweise metallische Werkstoffe auf der Basis Fe und/oder Ni. Als Deckschicht ausbildendes Element bei den hohen Betriebstemperaturen einer SOFC (typischerweise 600 - 1000 °C) enthält der Werkstoff signifikante Anteile an Chrom. Die genaue Chromkonzentration hängt dabei vom jeweiligen Werkstofftyp ab. In Legierungen auf Chrombasis kann der Chromgehalt zwischen z. B. 60 und nahezu 100 Gew.-% variieren. In gebräuchlichen Hochtemperatur-Konstruktionswerkstoffen auf Fe-, Ni- oder FeNi-Basis beträgt der Chromgehalt üblicherweise 13 bis 30 Gew.-%. Für eine Interkonnektoranwendung wurden bisher insbesondere Legierungen auf Cr-Basis sowie FeCr-Basis in Betracht gezogen, da Werkstoffe auf der Basis NiCr und FeNiCr im Vergleich zu den keramischen SOFC-Materialien zu hohe thermische Ausdehnungskoeffizienten aufweisen.

Gegenstand der Erfindung ist, dass das Substrat auf Cr- oder FeCr-Basis weitere metallische Legierungselemente enthält wie beispielsweise Mangan, Magnesium, Vanadium, etc. Die Konzentrationen dieser Elemente betragen üblicherweise 0,1 - 5 Gew.-%, bevorzugt 0,3 bis 1 Gew.-%. Diese Elemente besitzen die Eigenschaft, bei Betriebstemperatur der Brennstoffzelle und vorliegender oxidierender Betriebsatmosphäre sehr schnell durch die auf der Substratoberfläche gebildete Chrom(III)oxidschicht zu diffundieren und sich somit in oxidischer Form an der Grenzfläche Oxid/Gas anzureichern.

Wird das Substrat vor dem Einsatz in der SOFC mit einer oxidischen oder metallischen Schutzschicht versehen, die aus einem spinellbildenden Element wie z. B. Kobalt, Nickel, Eisen oder Kupfer besteht, so diffundieren die oben genannten Legierungselemente wie gehabt durch die Chrom(III)oxid-Schicht auf der Oberfläche des Substrates hindurch. In der aufgebrachten Schutzschicht reagieren sie unter Bildung einer neuen, dichten und insbesondere chromfreien Schicht, die ihrerseits durch ihre Gasdichtigkeit eine weitere Freisetzung des Chroms und somit die Chromverdampfung verhindert. Dadurch kann eine Sublimation des Chroms zur Kathode und somit eine Vergiftung der Kathode bzw. der Grenzfläche Kathode/Elektrolyt durch Chrom effektiv verhindert werden. Dabei ist zu beachten, dass die Bildung dieser chromfreien Schutzschicht unter oxidierenden Bedingungen und bei Betriebstemperatur bereits nach wenigen Stunden erfolgt. Insbesondere chromfreie Spinelle sind bei Betriebstemperatur thermodynamisch stabil und besitzen eine ausreichend hohe elektrische Leitfähigkeit. Sie haften gut an der Chromoxidschicht. Die Haftungseigenschaften sind gut, da die thermischen Ausdehnungskoeffizienten beider Schichten miteinander vergleichbar sind.

Im Vergleich zu den anderen oben genannten Schutzmaßnahmen hat die neue Erfindung folgende, für die SOFC-Technik entscheidende Vorteile:
a) Da sich die chromfreie Spinellschicht durch Reaktion zumindest eines Legierungselementes aus dem Metall mit einem Legierungselement aus der aufgebrachten Schicht bildet, ist sie regelmäßig, kompakt, gasdicht und gut haftend.
b) Auftretende Mikrorisse während des Langzeitbetriebs (z. B. induziert durch Temperaturzyklierung) in der chromfreien Spinellschicht sind ausheilfähig, da genügend Reservoir der reagierenden Elemente in Legierung und aufgebrachter Schicht vorhanden ist.
c) Die äußere Schicht kann mit herkömmlichen, einfachen Beschichtungsverfahren (Sprüh- oder Druckverfahren) aufgebracht werden und muss selbst nicht unbedingt eine hohe Dichte aufweisen.

### Spezieller Beschreibungsteil

Nachfolgend wird der Gegenstand der Erfindung anhand von Figuren und Ausführungsbeispielen näher erläutert, ohne dass der Gegenstand der Erfindung dadurch beschränkt wird.

Es zeigen die
- Figur 1:: Bild einer Oxidschicht auf einer FeCr-Legierung mit Manganzusatz nach Auslagerung bei 800°C für 1000 h in Luft, sowie dazugehörige Elementprofile, gemäß dem Stand der Technik
- Figur 2:: Schematische Darstellung einer kathodenseitigen Interkonnektoroxidation bei Betriebstemperaturen einer Hochtemperatur-Brennstoffzelle, gemäß dem Stand der Technik.
- Figur 3a:: Schematische Darstellung der Bildung einer gasdichten, chromfreien Schutzschicht auf dem Interkonnektor bei Betriebstemperaturen einer Hochtemperatur-Brennstoffzelle.
- Figur 3b:: Schematische Darstellung einer gasdichten, chromfreien Schutzschicht auf dem Interkonnektor bei Betriebstemperaturen einer Hochtemperatur-Brennstoffzelle.
- Figur 4:: Gasdichte, chromfreie Schutzschicht eines manganhaltigen Stahls, der mit einer Co₃O₄ Schicht beschichtet und für 500 Stunden bei 800°C ausgelagert wurde, sowie dazugehörige Elementprofile.

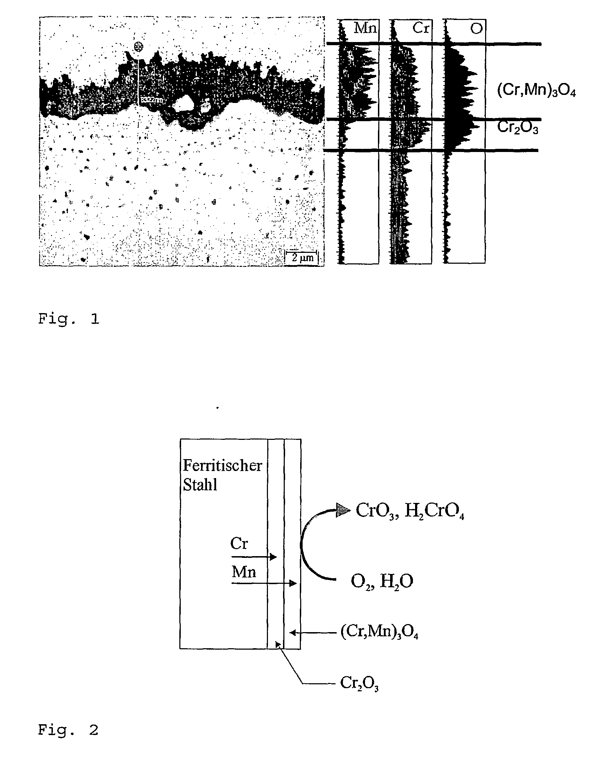

Die fotografische Abbildung der Figur 1 zeigt den typischen Aufbau des Schichtsystems gemäß dem Stand der Technik, welches sich auf einer FeCr-Legierung mit Manganzusatz nach Auslagerung bei 800°C für 1000 h in Luft ausbildet. Die dazugehörigen Elementprofile für Mangan, Chrom und Sauerstoff zeigen deutlich den zweilagigen Schichtaufbau auf dem Stahl an:
An der Grenzfläche zur Gasphase hat sich eine Chrom/Mangan-Mischoxidschicht ((Cr,Mn)₃O₄-Schicht) ausgebildet, die viel Mangan und Chrom sowie Sauerstoff enthält. In einer darunter liegenden Schicht, die deutlich weniger Mangan aufweist, hat sich die typische Chromoxidschicht (Cr₂O₃) ausgebildet.

Die Figur 2 verdeutlicht schematisch die kathodenseitige Interkonnektorkorrosion bei Betriebstemperaturen einer Hochtemperatur-Brennstoffzelle, wie sie gemäß dem Stand der Technik regelmäßig auftritt. Die durch die Korrosion auf dem Interkonnektorwerkstoff gebildete Deckschicht aus Cr₂O₃ und (Cr, Mn)₃O₄-Schicht setzt bei weiterem Kontakt mit O₂ und H₂O flüchtiges Chrom (VI) oxid und Chrom (VI) oxidhydroxid frei.

Figur 3a: Schematische Darstellung der Bildung einer Chromverdampfungsschutzschicht auf dem Interkonnektor bei Betriebstemperatur einer Hochtemperatur-Brennstoffzelle gemäß dieser Erfindung. Die Chromverdampfungsschutzschicht ((Mn,Co)₃O₄) bildet sich aus dem Kobalt der aufgetragenen Co₃O₄- bzw. LaCoO₃-Schicht und dem Mangan, das durch die innere Chrom(III)oxid-Schicht nach außen diffundiert. Diese (Mn,Co)₃O₄-Schicht verhindert die weitere Chromverdampfung.

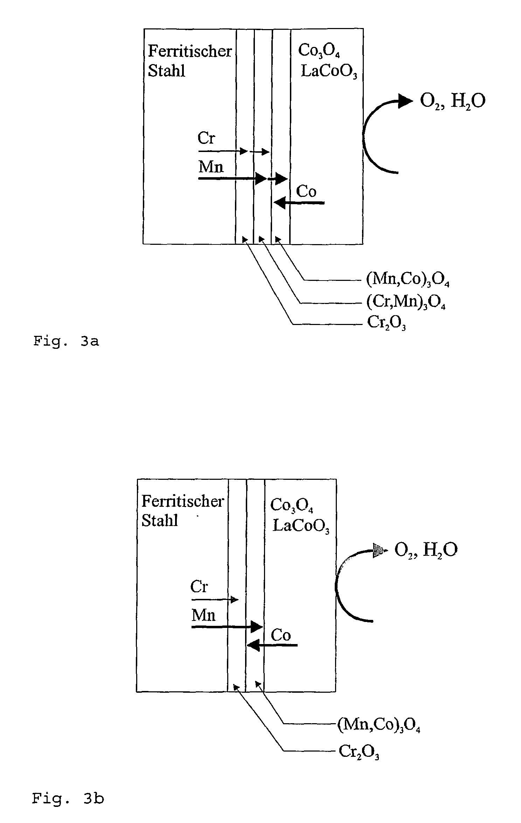

Figur 3b: Schematische Darstellung der Bildung einer Chromverdampfungsschutzschicht auf dem Interkonnektor bei Betriebstemperatur der Hochtemperatur-Brennstoffzelle. Die Chromverdampfungsschutzschicht bildet sich direkt aus dem Kobalt der aufgetragenen Co₃O₄- bzw. LaCoO₃-Schicht und dem Mangan aus dem Interkonnektorwerkstoff.

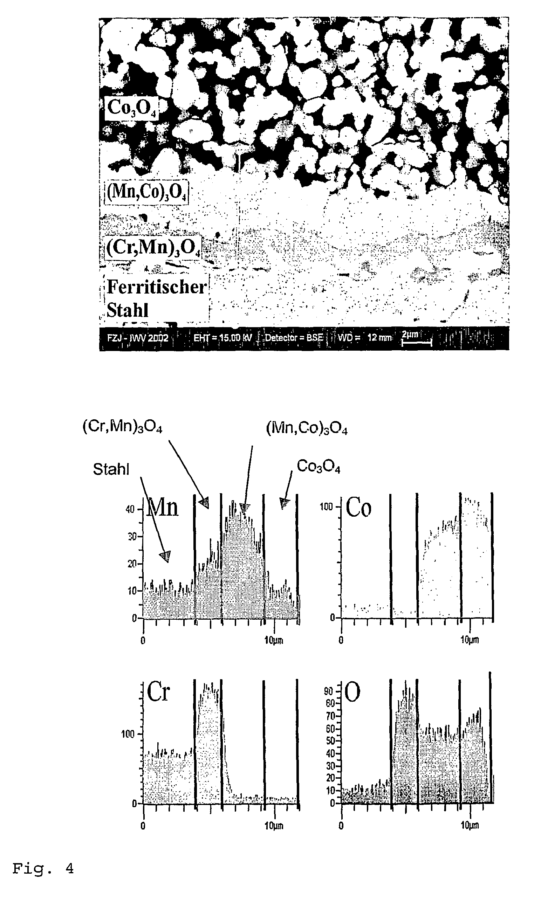

Figur 4: Korrosionsschicht eines manganhaltigen Stahls, der mit Co₃O₄ beschichtet und für 500 Stunden bei 800 °C ausgelagert wurde. Die Elementprofile zeigen die Bildung einer (Mn, Co)₃O₄-Schicht. Diese Schutzschicht bildet sich aus dem Kobalt der aufgetragenen Co₃O₄₋Schicht und dem Mangan, das durch die innere (Cr,Mn)₃O₄-Schicht nach außen diffundiert.
Ausführungsbeispiele 1) Verwendet wurde eine Legierung gemäß DE 100 25 108 A1 mit 23 Gew.-% Cr und 0,5 Gew.-% Mn. Als äußere Schicht wurde ein Kobaltoxid (Co₃O₄) als poröse Keramikschicht aufgebracht. Nach 500 Stunden bei 800 °C bildete sich ein chromfreier, porenarmer Spinell der Zusammensetzung (Mn, Co)₃O₄, ohne mittels EDXanalytisch nachweisbare Mengen von Chrom auf der Chromoxidschicht (Abb. 4)zu enthalten. Dieser Spinell besitzt eine höhere Leitfähigkeit als die Chrom(III)oxid-Schicht. Da Sauerstoff im Gasraum nicht länger im Kontakt mit der Chromoxidschicht steht, führt dies zu geringeren Wachstumsraten des Chromoxids und bewirkt so einen Oxidationsschuts. Somit bilden sich keine Chrom(VI)oxid- und/oder Chrom(VI)hydroxid-Verbindungen mehr durch Sauerstoff und Wasserdampf, wodurch eine Kathodenvergiftung verhindert wird.
2) Verwendet wurde eine Legierung gemäß DE 100 25 108 A1 mit 23 Gew.-% Cr und 0,5 Gew.-% Mn. Als äußere Schicht wurde ein Lanthankobaltoxid (LaCoO₃) als poröse Keramikschicht aufgebracht. Nach 500 Stunden bei 800 °C bildete sich ebenfalls ein chromfreier, gasdichter Spinell der Zusammensetzung (Mn, Co)₃O₄.

## Patentansprüche

1. Verfahren zur Herstellung einer Schutzschicht auf einem Substrat mit den Schritten
a) auf das chromoxidbildende Substrat umfassend wenigstens ein Legierungszusatz wird eine Schicht mit wenigstens einem spinellbildenden Element aufgebracht,
b) an der Grenzfläche Substrat/aufgebrachte Schicht bildet sich eine Chromoxidschicht aus,
c) bei Temperaturen von 500 °C bis 1000°C diffundiert wenigstens ein Legierungszusatz aus dem Substrat durch die Chromoxidschicht und verbindet sich mit wenigstens einem aus der aufgebrachten Schicht diffundierten, spinellbildenden Element und bildet zwischen der Chromoxidschicht des Substrates und der aufgebrachten Schicht eine chromfreien, gasdichte Spinellschicht aus.

2. Verfahren nach Anspruch 1, bei dem ein chromoxidbildendes Substrat mit wenigstens einem Legierungszusatz aus der Gruppe (Mangan, Magnesium, Vanadium) eingesetzt wird.

3. Verfahren nach einem der Ansprüche 1 bis 2, bei dem eine Schicht mit einem spinellbildenden Element aus der Gruppe (Kobalt, Nickel, Eisen, Kupfer oder Vanadium) auf dem Substrat aufgebracht wird.

4. Verfahren nach einem der Ansprüchen 1 bis 3, bei dem die aufgebrachte Schicht in Form von Monoxiden als Suspension oder Schlicker durch Nasspulverspritzen, Aufpinseln oder Siebdruck auf dem chromoxidbildenden-Substrat aufgebracht wird.

5. Verfahren nach einem der Ansprüche 1 bis 4, bei dem die aufgebrachte Schicht in Form von CoO und CuO in definiertem Verhältnis auf das chromoxidbildende Substrat aufgebracht wird.

6. Verfahren nach einem der Ansprüche 1 bis 5, bei dem Mangan als Legierungszusatz des Substrates und Kobalt als spinellbildendes Element aus der aufgebrachten Schicht eine gasdichte, chromfreie Spinellschicht gemäß der Formel Co_{3-x-y}MₓMn_{y}O₄ ausbilden, mit M = Ti, V, Mn, Fe, Ni, Cu; x < 0,4 und 0 < y < 1,5.

7. Verfahren nach einem der Ansprüche 1 bis 6, bei dem Mangan als Legierungszusatz des Substrates und Kobalt und Kupfer als spinellbildende Elemente aus der aufgebrachten Schicht eine gasdichte, chromfreie Spinellschicht gemäß der Formel CO_{3-x-y}CuₓMn_{y}O₄ ausbilden, mit 0 <x< 1,5; 0<y<3 und (x+y) < 3.

8. Interkonnektor für eine Hochtemperatur-Brennstoffzelle mit einer Schutzschicht hergestellt nach einem Verfahren gemäß einem der Ansprüche 1 bis 7, umfassend ein chromoxidbildendes Substrat mit wenigstens einem Legierungszusatz welches eine Chromoxidoberfläche aufweist, und eine darauf aufgebrachte Schicht, umfassend wenigstens ein spinellbildendes Element,
**dadurch gekennzeichnet, dass**
zwischen der Chromoxidschicht des Substrates und der aufgebrachten Schicht eine chromfreie, gasdichte Spinellschicht angeordnet ist, welche wenigstens einen Legierungszusatz aus dem Substrat und ein spinellbildendes Element aus der aufgebrachten Schicht umfasst.

9. Interkonnektor nach Anspruch 8, bei dem das chromoxidbildende Substrat einen Legierungszusatz aus der Gruppe (Mangan, Magnesium, Vanadium) aufweist.

10. Interkonnektor nach Anspruch 8 bis 9, bei dem die aufgebrachte Schicht ein spinellbildendes Element aus der Gruppe (Kobalt, Nickel, Eisen, Kupfer oder Vanadium) aufweist.

11. Interkonnektor nach Anspruch 8 bis 10, bei dem die aufgebrachte Schicht als metallische Schicht vorliegt.

12. Interkonnektor nach Anspruch 8 bis 10, bei dem die aufgebrachte Schicht als oxidische Keramik vorliegt.

13. Interkonnektor nach Anspruch 12, bei dem die oxidische Keramik als binäres Übergangsoxid, insbesondere als V₂O₅, Co₃O₄ oder CuO vorliegt.

14. Interkonnektor nach Anspruch 12, bei dem die oxidische Keramik als komplexes Oxid, insbesondere als Perowskit oder als Spinell mit Kobalt vorliegt.

15. Interkonnektor nach Anspruch 12, bei dem die oxidische Keramik als LaCo₁₋ₓMₓO₃ oder als Co_{3-y}M_{y}O₄ mit M = Ti, V, Mn, Fe, Ni, Cu; x < 0,4 und 0 < y < 1,5 vorliegt.

## Claims

1. Method for producing a protective coating on a substrate with the steps
a) a coating with at least one spinel forming element is applied to the chromium oxide forming substrate comprising at least one alloy addition,
b) a chromium oxide coating forms in the substrate/applied coating border area,
c) at temperatures of 500° C to 1000° C at least one alloy addition from the substrate diffuses through the chromium oxide coating and combines with at least one diffused spinel forming element from the applied coating and forms a chromium free, gastight spinel coating between the chromium oxide coating of the substrate and the applied coating.

2. Method according to claim 1, in which a chromium oxide forming substrate is used with at least one alloy addition from the group (manganese, magnesium, vanadium).

3. Method according to one of claims 1 to 2, in which a coating with a spinel forming element from the group (cobalt, nickel, iron, copper or vanadium) is applied to the substrate.

4. Method according to one of claims 1 to 3, in which the coating applied in the form of monoxides as suspension or slip through wet spraying, brushing or screen printing is applied to the chromium oxide forming substrate.

5. Method according to one of claims 1 to 4, in which the coating applied in the form of CoO and CuO is applied to the chromium oxide forming substrate in a defined proportion.

6. Method according to one of claims 1 to 5, in which manganese as the alloy addition of the substrate and cobalt as the spinel forming element from the applied coating form a gastight, chromium free spinel coating according to the formula Co_{3-x-y}MₓMn_{y}O₄, with M = Ti, V, Mn, Fe, Ni, Cu; x < 0.4 and 0 < y < 1,5.

7. Method according to one of claims 1 to 6, in which manganese as the alloy addition of the substrate and cobalt and copper as the spinel forming elements from the applied coating form a gastight, chromium free spinel coating according to the formula Co_{3-x-y}CuₓMn_{y}O₄, with 0 < x < 1,5; 0 < y < 3 and (x+y) < 3.

8. Interconnector for a high temperature fuel cell with a protective coating produced according to a method according to one of claims 1 to 7, comprising a chromium oxide forming substrate with at least one alloy addition, which has a chromium oxide surface, and a coating applied to it, comprising at least one spinel forming element,
**characterised in that**
between the chromium oxide coating of the substrate and the applied coating there is a chromium free, gastight spinel coating, which has at least one alloy addition from the substrate and one spinel forming element from the applied coating.

9. Interconnector according to claim 8, in which the chromium oxide forming substrate has an alloy addition from the group (manganese, magnesium, vanadium).

10. Interconnector according to claim 8 to 9, in which the applied coating has a spinel forming element from the group (cobalt, nickel, iron, copper or vanadium).

11. lnterconnector according to claim 8 to 10, in which the applied coating is present as a metallic coating.

12. lnterconnector according to claim 8 to 10, in which the applied coating is present as an oxidic ceramic.

13. Interconnector according to claim 12, in which the oxide ceramic is present as a binary transition oxide, particularly V₂O₅, Co₃O₄ or CuO.

14. Interconnector according to claim 12, in which the oxidic ceramic is present as a complex oxide, particularly a perovskite or spinel with cobalt.

15. Interconnector according to claim 12, in which the oxidic ceramic is present as LaCo₁₋ₓMₓO₃ or Co_{3-y}M_{y}O₄ with M = Ti, V, Mn, Fe, Ni, Cu; x < 0.4 and 0 < y < 1,5.

## Revendications

1. Procédé de production d'une couche de protection sur un substrat, comprenant les stades dans lesquels
a) on dépose sur le substrat, formant un oxyde de chrome et comprenant au moins un additif d'alliage, une couche d'au moins un élément formant un spinelle,
b) il se forme à l'interface substrat/couche déposée, une couche d'oxyde de chrome,
c) à des températures de 500°C à 1000° C au moins un additif d'alliage diffuse du substrat à travers la couche d'oxyde de chrome et se fixe à au moins un élément formant un spinelle diffusé de la couche déposée et il se forme entre la couche d'oxyde de chrome du substrat et de la couche déposée une couche de spinelle exempte de chrome et étanche au gaz

2. Procédé suivant la revendication 1, dans lequel on utilise un substrat formant un oxyde de chrome ayant au moins un additif d'alliage choisi dans le groupe (manganèse, magnésium, vanadium)

3. Procédé suivant l'une des revendications 1 à 2, dans lequel on dépose sur le substrat une couche ayant un élément formant spinelle choisi dans le groupe (cobalt, nickel, fer, cuivre ou vanadium)

4. Procédé suivant l'une des revendications 1 à 3, dans lequel on dépose sur le substrat formant un oxyde de chrome la couche déposée sous la forme de monoxydes en tant que suspension ou barbotine par projection de poudre, en voie humide, au pinceau par sérigraphie,

5. Procédé suivant l'une des revendications 1 à 4, dans lequel on dépose sur le substrat formant un oxyde de chrome la couche déposée sous la forme de CoO et de CuO en une proportion définie.

6. Procédé suivant l'une des revendications 1 à 5, dans lequel du manganèse en tant qu'additif d'alliage du substrat et du cobalt en tant qu'élément formant un spinelle à partir de la couche déposée forment une couche de spinelle étanche au gaz et exempte de chrome suivant la formule Co_{3-x-y}MₓMn_{y}O₄, avec M = Ti, V, Mn, Fe, Ni, Cu ; x < 0,4 et 0 < y < 1,5

7. Procédé suivant l'une des revendications 1 à 6, dans lequel du manganèse en tant qu'additif d'alliage du substrat et du cobalt et du cuivre en tant qu'éléments formant un spinelle de la couche déposée forment une couche de spinelle étanche au gaz et exempte de chrome suivant la formule Co_{3-x-y}CuₓMn_{y}O₄ avec 0 < x < 1,5 ; 0 < y < 3 et (x + y) < 3.

8. Interconnecteur pour une pile à combustible à haute température, comprenant une couche de protection produite par un procédé suivant l'une des revendications 1 à 7 comprenant un substrat formant un oxyde de chrome et ayant au moins un additif d'alliage qui a une surface en oxyde de chrome et une couche qui y est déposée comprenant au moins un élément formant un spinelle,
**caractérise en ce que**
est interposée, entre la couche d'oxyde de chrome du substrat et la couche déposée, une couche de spinelle exempte de chrome, étanche au gaz et qui comprend au moins un additif d'alliage provenant du substrat et un élément formant un spinelle provenant de la couche déposée

9. Interconnecteur suivant la revendication 8, dans lequel le substrat formant un oxyde de chrome au moins un additif d'alliage choisi dans le groupe (manganèse, magnésium, vanadium).

10. Interconnecteur suivant la revendication 8 à 9, dans lequel la couche déposée a un élément formant spinelle choisi dans le groupe (cobalt, nickel, fer, cuivre ou vanadium).

11. Interconnecteur suivant la revendication 8 à 10, dans lequel la couche déposée se présente sous la forme d'une couche métallique.

12. Interconnecteur sur la revendication 8 à 10, dans lequel la couche déposée se présente sous la forme d'une céramique oxydée.

13. Interconnecteur sur la revendication 12, dans lequel la céramique oxydée se présente sous la forme d'un oxyde de transition binaire, notamment sous la forme de V₂O₅, Co₃O₄, ou CuO.

14. Interconnecteur suivant la revendication 12, dans lequel la céramique oxydée se présente sous la forme d'un oxyde complexe, notamment d'un perowskite ou d'un spinelle avec du cobalt.

15. Interconnecteur suivant la revendication 12, dans lequel la céramique oxydée se présente sous la forme de La Co₁₋ₓMₓO₃ ou de Co_{3-y}M_{y}O₄ avec M = Ti, V, Mn, Fe, Ni, Cu ; x < 0,4 et O < y < 1,5
